# FASCICULE DE BREVET EUROPEEN

(11) **EP 2 390 015 B1**
(45) Date de publication et mention de la délivrance du brevet: **20.03.2013**
(21) Numéro de dépôt: 11305643.6
(22) Date de dépôt: 26.05.2011
(51) Int. Cl.: B09B 3/00

(54) **Procédé d'obtention d'un élément solide à partir de déchets graisseux**
Verfahren zum Erzeugen eines festen Elements aus Fettabfällen
Method for obtaining a solid element from greasy waste

(30) Priorité: 28.05.2010 FR 1054141; 23.02.2011 FR 1151462
(43) Date de publication de la demande: 30.11.2011
(73) Titulaire: Labat, Xavier, 40800 Aire Sur L'Adour (FR)
(72) Inventeur: Labat, Xavier, 40800 Aire Sur L'Adour (FR)
(74) Mandataire: Fantin, Laurent

(56) Documents cités:
- EP-A1- 0 682 965
- FR-A1- 2 418 004

## Description

La présente invention se rapporte à un procédé d'obtention d'un élément solide à partir de déchets graisseux pâteux ou liquide. Ce procédé permet notamment l'obtention d'un combustible solide ou d'un amendement pour la culture.

Le document EP-A-0 682 965 décrit un procédé et installation de traitement et de valorisation de déchets graisseux qui a pour but d'obtenir une phase grasse fluide acheminée via des canalisations vers des moyens d'incinération.

Le traitement des déchets graisseux collectés provenant des bacs décanteurs, des bacs à graisse, des aéroflottateurs, des séparateurs ou autres, issus des industries, notamment agroalimentaires, des collectivités ou des particuliers est relativement coûteux, en raison notamment des coûts du transport jusqu'au centre de traitement et des coûts de traitement a proprement parlé. En effet, le produit collecté contient une grande proportion d'eau si bien que le volume transporté et traité est relativement important par rapport au volume de matière sèche contenue.

Enfin, ce produit est jusqu'ici peu valorisé car difficilement exploitable en l'état. Aussi, la présente invention vise à pallier les inconvénients de l'art antérieur en proposant un procédé d'élaboration d'un élément solide à partir de déchets graisseux et huileux permettant de valoriser lesdits déchets en transformant leurs acides gras contenus par un traitement physico-chimique.

A cet effet, l'invention a pour objet un procédé d'obtention d'au moins un élément solide à partir de déchets graisseux collectés, caractérisé en ce qu'il consiste à incorporer aux déchets graisseux de l'ordre de 30 à 50 gr/l de chaux ou de soude, à laisser décanter puis à introduire le mélange dans une presse à plateaux comportant une pluralité de filtres avec des ouvertures de l'ordre de 20 à 300 µm pour obtenir au moins un élément solide avec un taux de matière sèche supérieur à 40%.

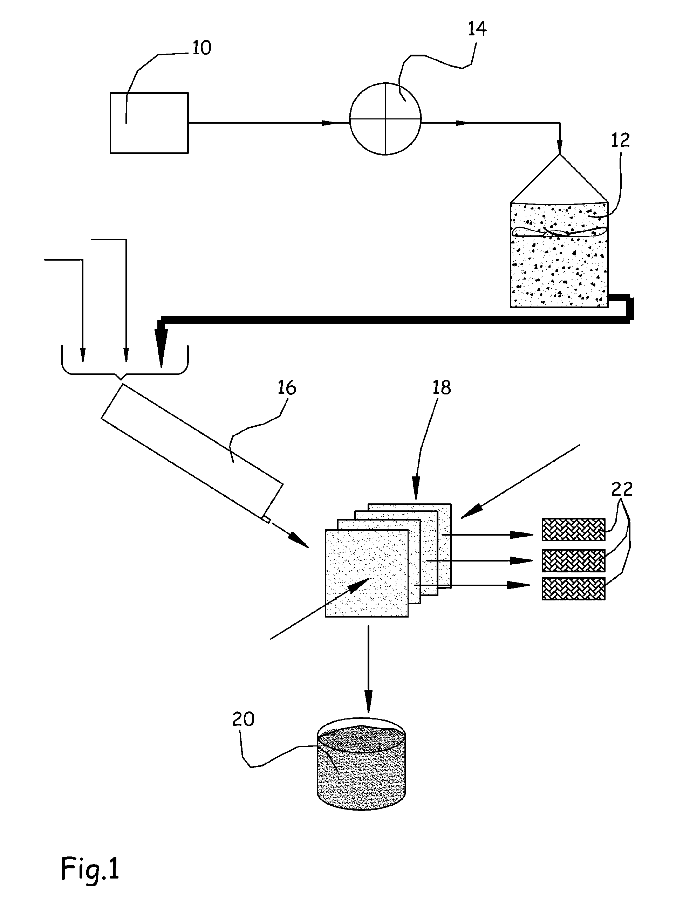

D'autres caractéristiques et avantages ressortiront de la description qui va suivre de l'invention, description donnée à titre d'exemple uniquement, en regard de la figure 1 unique qui représente un schéma d'un dispositif permettant la mise en oeuvre du procédé.

Le procédé est maintenant décrit :
Les déchets graisseux collectés (pâteux ou liquide) ont une concentration de matière sèche faible comprise entre 1 et 20%. Ces déchets graisseux peuvent être d'origine végétale, animale, minérale, par exemple provenir d'abattoirs, de conserveries, de fondoirs, de stations de traitement, de l'extraction d'huile, de divers procédés ou de bacs à graisse tout simplement, etc....

Le procédé de l'invention peut être applicable à toutes sortes de boues urbaines, légumières, amidonneuses, industrielles, organiques ou non avec des déchets graisseux. Il peut s'appliquer également aux déchets hydrocarburés (boues, huiles, sables et eaux pollués, etc....).

Pour la suite, par déchets graisseux, on entend des graisses en général (déchets ou non) ou des déchets graisseux provenant de la même source ou un mélange de déchets graisseux de sources différentes (origine, siccité, viscosité, densité, régularité, saisonnière, propreté, etc.).

Les déchets graisseux provenant de différentes sources sont de préférence mélangés afin d'homogénéiser leurs propriétés.

La collecte peut s'effectuer à l'aide de véhicules, de camions citernes qui dépotent leurs cargaisons dans des cuves ou fosses de reprise. Au moment du dépotage, un premier filtrage peut intervenir afin de retirer les corps étrangers solides.

Les déchets graisseux sont de préférence décantés, dégrillés, dessablés, pompés, broyés, puis stockés dans un conteneur appelé silo tampon afin de les mélanger et hydrolyser pour homogénéiser leurs propriétés.

Ainsi, comme illustré sur la figure 1, après la collecte, les déchets graisseux sont déversés dans au moins une cuve ou fosse de reprise 10. Avantageusement, dans cette cuve 10, les déchets graisseux subissent une opération de dessablage.

De préférence, les déchets graisseux sont décantés dans la ou les cuve(s) pour extraire une partie de l'eau. Cette phase de décantation peut permettre de réaliser le dessablage. Suite à cette décantation, le mélange de déchets graisseux a une concentration de matière sèche de 6 à 20%.

Après décantation, les déchets graisseux sont brassés dans au moins un silo tampon 12. Pour assurer le transfert de la ou des cuves de reprise 10 vers le silo tampon 12, on utilise au moins une pompe 14. Avantageusement, les déchets sont préalablement broyés avant d'être introduits dans le silo tampon 12.

A intérieur du silo tampon 12, avec ou sans hygiénisation ou stérilisation, les déchets sont brassés de façon continue ou séquentielle par circulation ou brassage dynamique ou hydraulique afin de créer une émulsion et d'éviter la formation de croûte en surface. Le silo 12 étant de préférence fermé par une bâche ou une dalle, les gaz présents pourront être si besoin captés et envoyés vers un méthaniseur ou autres. A titre d'exemple, le silo tampon 12 a une contenance de l'ordre de 50 à 500 m³.

De préférence, cette émulsion hydrolysée âpre est maintenue dans le silo tampon 12 pendant une durée de l'ordre de 5 jours.

Elle est transférée par aspiration ou pompage vers un ou plusieurs conteneur(s) de 1 à 50 m³ appelés réacteur(s) 16 équipés de brasseurs où elle subira un traitement physico-chimique clé de l'invention.

Selon une caractéristique de l'invention, on incorpore aux déchets graisseux de la chaux pulvérulente (vive ou non) de l'ordre de 30 à 50 gr/l ou de la chaux liquide, et de préférence, du chlorure ferrique de l'ordre de 4 ml/l, du MK2 (oxyde d'aluminium). La chaux permet d'obtenir une hygiènisation des déchets graisseux mais pourrait être remplacée pour partie ou totalement par de la soude afin de limiter la fraction minérale. Si besoin est, un polymère et/ou un substrat organique de préférence ligneux peut être mélangé au mélange afin d'améliorer la réaction physico-chimique.

L'incorporation des produits (chaux, oxydant, poudre organique, polymère, etc..) est réalisée par saupoudrage ou par pompe doseuse, petit à petit, en mélangeant de préférence la chaux en premier.

Le chlorure ferrique est un oxydant permettant de casser entre autre les acides gras.

Le MK2 à base d'aluminium remplit le même rôle et peut compléter le dispositif.

Après l'incorporation des produits, on laisse le mélange se décanter. Si une pellicule d'eau se forme en surface et brille, il n'est pas nécessaire de rajouter de la chaux. Dans le cas contraire, on ajoute progressivement de la chaux jusqu'à obtenir ce phénomène.

Après l'étape d'incorporation, on laisse décanter de 5 minutes à 1 h en fonction du volume traité pour laisser agir. Cette étape de traitement est primordiale.

En suivant, le mélange est repris par pompage pour être introduit dans une presse à plateaux 18 avec un débit régulier et en maintenant une pression minimale de 12 bars qui augmente progressivement jusqu'à éventuellement 18 bars (la pression est comprise généralement entre 12 et 18 bars). La presse à plateaux comprend une pluralité de filtres avec des ouvertures de l'ordre de 20 à 300 µm. De préférence, les ouvertures des filtres ont un diamètre de l'ordre de 200 *µ*m.

A titre d'exemple, on monte progressivement à 15 bars pour un débit de 1 à 50 m³/heure pour une opération de pressage de 2 heures. Lorsque la pression baisse, on introduit du mélange de manière à maintenir la pression. Plus le nombre de séquences est élevé, meilleure est la concentration en matière sèche.

Ainsi, sur une presse de 110 plateaux, en traitant 30 m³ brut de déchets graisseux, on peut sortir 6 m³ d'éléments solides se présentant sous forme de gâteaux solides avec un taux de matière sèche d'approximativement 50%.

L'eau traitée issue du pressage à froid rejoint une cuve de stockage 20 pour être utilisée soit en fertigation, soit en traitement par osmose, soit en microfiltration ou autres pour être réutilisée ou envoyée plus simplement en station d'épuration. Après le pressage, les déchets graisseux se présentent sous la forme de gâteaux solides 22 avec un taux de matière sèche supérieur à 40%.

Après cette étape de pressage, les gâteaux sont débâtis et transférés par bennes pour être séchés (naturellement, par soufflerie ou par convection par exemple) de façon statique ou dynamique. La chaux continue à agir et favorise la dessiccation.

A titre d'exemple, les gâteaux sont stockés dans des bennes équipées d'un double fond où on souffle de l'air froid ou chaud alimenté par une chaudière au gaz naturel ou de biomasse. Cette opération dure environ 3jours pour chaque bennes à 40°C en ventilation basse.

Une autre technique de séchage à 40-50°C découlant du stockage des fientes de volailles peut être utilisée. Dans ce cas, on peut utiliser de préférence la chaleur issue du méthanisateur ainsi qu'une technique d'aération de type « stripping » pour capter les gaz et odeurs résiduelles.

Après séchage, on peut obtenir un taux de matière sèche supérieur à 80%.

Une solution de séchage sous serres chauffées par la chaleur produite par un méthaniseur peut permettre d'obtenir naturellement un produit sec avec un taux de matière sèche de l'ordre de 90%.

L'élément solide obtenu selon l'invention peut constituer un excellent amendement pour le sol, potentiellement utilisable en culture biologique. A titre d'exemple, un apport de 10 T/Ha apporte 110 U/Ha d'azote, 70 U/Ha de phosphore et 0,5 T/Ha d'oxyde de calcium plus d'autres oligo-éléments.

Selon une autre solution, le produit obtenu peut être traité par pyrolyse afin d'obtenir d'une part du charbon et d'autre part une huile pyrolytique utilisable en chaudière mais également après filtration dans des moteurs thermiques ou à combustion.

La gazéification à haute température peut être aussi une solution intéressante pour ces éléments solides.

Selon une application, le produit obtenu peut constituer un excellent combustible avec une PCI de l'ordre de 15000 à 25000 KJ/Kg.

A cet effet, après le retrait des gâteaux solides 22 de la presse, ces derniers sont stockés de préférence pendant une durée de l'ordre d'une journée. Cette phase permet d'obtenir un séchage naturel qui permet d'augmenter le pourcentage de matière sèche qui varie de 40 à 60%.

Après cette phase, les gâteaux solides 22 (séchés ou non séchés) sont broyés et mélangés à au moins un produit ligneux (pailles, déchets verts, copeaux sciures,...), à des déchets viticoles tels que le marc, les sarments ou à d'autres éléments comme par exemple des déchets inorganiques, notamment des hydrocarburés, destinés potentiellement à la combustion.

Ces éléments sont broyés et mélangés puis transformés en granules avec un taux de matière sèche de l'ordre d'au moins 85% facilement stockable et transportable, pour alimenter des chaudières à biomasse remplaçant avantageusement d'autres énergies fossiles.

Avantageusement, le pourcentage en poids des gâteaux solides 22 broyés est de l'ordre de 10 à 50% avec un taux de matière sèche de l'ordre de 50%, le reste du mélange étant des déchets verts broyés avec un taux de matière sèche de l'ordre de 70%.

Selon un autre exemple, on peut mélanger 20% en poids de gâteaux solides 22 broyés et 80% en poids de bois sous forme de fibres et/ou de sciure.

Selon un autre exemple, on peut mélanger 40% en poids de rafles de maïs, 40% en poids de bois sous forme de fibres et/ou de sciure et 20% en poids de gâteaux solides 22 broyés.

Selon un autre exemple, on peut mélanger 40% en poids de paille, 40% en poids de déchets verts broyés et 20% en poids de gâteaux solides 22 broyés. Toutefois, d'autres compositions de granules peuvent être envisagées.

La fraction constituée des gâteaux solides 22 broyés assure la fonction de liant et permet d'augmenter le pouvoir calorifique du mélange.

Selon des tests permettant de déterminer le pouvoir calorifique réalisés selon le protocole Normé XP CEN/ TS 14918, on obtient pour les granules selon l'invention un pouvoir calorifique PCI sur brut de 17,1829 MJ/kg sensiblement équivalent (voire supérieur) à celui obtenu avec des granules de bois de qualité. Les granules obtenues selon l'invention peuvent non seulement être utilisées comme combustible mais également comme un engrais organique.

Un mélange plus particulièrement adapté pour cette utilisation consiste à prévoir 40% en poids de fumier de cheval (avec un taux de matière sèche de l'ordre de 50%), 40% en poids de sciure et 20% en poids de gâteaux solides 22 broyés.

## Revendications

1. Procédé d'obtention d'au moins un élément solide (22) à partir de déchets graisseux collectés, **caractérisé en ce qu'**il consiste à incorporer aux déchets graisseux de l'ordre de 30 à 50 gr/l de chaux ou de soude, à laisser décanter puis à introduire le mélange dans une presse à plateaux (18) comportant une pluralité de filtres avec des ouvertures de l'ordre de 20 à 300 µm pour obtenir au moins un élément solide (22) avec un taux de matière sèche supérieur à 40%.

2. Procédé selon la revendication 1, **caractérisé en ce que** les déchets graisseux sont hydrolysés préalablement à l'incorporation de la chaux ou de soude.

3. Procédé selon la revendication 2, **caractérisé en ce qu'**on introduit le mélange dans la presse à plateaux (18) jusqu'à atteindre une pression minimale de l'ordre de 12 bars.

4. Procédé selon l'une quelconque des revendications précédentes, **caractérisé en ce qu'**il consiste à sécher l'élément solide (22) obtenu de manière à obtenir un taux de matière sèche de l'ordre de 80%.

5. Procédé selon l'une quelconque des revendications précédentes, **caractérisé en ce qu'**on incorpore de l'ordre de 4 ml/l de chlorure ferrique ou de l'oxyde d'aluminium ou un polymère au mélange préalablement au pressage.

6. Procédé selon l'une quelconque des revendications précédentes, **caractérisé en ce qu'**il consiste à ajuster la quantité de chaux ou de soude incorporée au mélange jusqu'à l'obtention d'une pellicule d'eau brillante en surface.

7. Procédé selon l'une quelconque des revendications précédentes, **caractérisé en ce qu'**il consiste à mélanger les déchets graisseux collectés et à les laisser décanter préalablement à l'incorporation de la chaux ou de la soude.

8. Procédé d'obtention d'un combustible sous forme de granules consistant à broyer les éléments solides (22) obtenus à partir du procédé selon l'une quelconque des revendications précédentes, et à mélanger 10 à 50% en poids desdits éléments broyés à au moins un produit ligneux.

9. Procédé d'obtention d'un combustible sous forme de granules selon la revendication 8, **caractérisé en ce qu'**il consiste à mélanger les éléments broyés à des déchets verts broyés.

10. Combustible sous forme de granules obtenu à partir du procédé selon la revendication 8 ou 9.

11. Procédé d'obtention d'un engrais sous forme de granules consistant à broyer les éléments solides (22) obtenus à partir du procédé selon l'une quelconque des revendications 1 à 7, et à mélanger 10 à 50% en poids desdits éléments broyés à au moins un produit ligneux.

12. Procédé d'obtention d'un engrais sous forme de granules selon la revendication 11, **caractérisé en ce qu'**il consiste à mélanger les éléments broyés à des déchets verts broyés.

13. Engrais sous forme de granules obtenu à partir du procédé selon la revendication 11 ou 12.

## Claims

1. A method of obtaining at least one solid element (22) from collected fatty waste, **characterised in that** it comprises incorporating around 30 to 50 g/l of lime or soda in the fatty waste, leaving to settle and then introducing the mixture into a platen press (18) comprising a plurality of filters with openings of around 20 to 300 µm in order to obtain at least one solid element (22) with a dry matter content greater than 40%.

2. A method according to claim 1, **characterised in that** the fatty waste is hydrolysed prior to the incorporation of the lime or soda.

3. A method according to claim 2, **characterised in that** the mixture is introduced into the platen press (18) until a minimum pressure of around 12 bar is reached.

4. A method according to any one of the preceding claims, **characterised in that** it comprises drying the solid element (22) obtained so as to obtain a dry matter content of around 80%.

5. A method according to any one of the preceding claims, **characterised in that** around 4 ml/l of ferric chloride or aluminium oxide or a polymer is incorporated in the mixture prior to pressing.

6. A method according to any one of the preceding claims, **characterised in that** it comprises adjusting the quantity of lime or soda incorporated in the mixture until a shiny film of water is obtained on the surface.

7. A method according to any one of the preceding claims, **characterised in that** it comprises mixing the fatty waste collected and leaving it to settle prior to the incorporation of the lime or soda.

8. A method of obtaining a fuel in the form of granules, comprising grinding the solid elements (22) obtained by the method according to any one of the preceding claims and mixing 10% to 50% by weight of said ground elements with at least one ligneous product.

9. A method of obtaining a fuel in the form of granules according to claim 8, **characterised in that** it comprises mixing the ground elements with ground green waste.

10. A fuel in the form of granules obtained by the method according to claim 8 or 9.

11. A method of obtaining a fertiliser in the form of granules, comprising grinding the solid elements (22) obtained by the method according to any one of claims 1 to 7, and mixing 10% to 50% by weight of said ground elements with at least one ligneous product.

12. A method of obtaining a fertiliser in the form of granules according to claim 11, **characterised in that** it comprises mixing the ground elements with ground green waste.

13. A fertiliser in the form of granules obtained by the method according to claim 11 or 12.

## Patentansprüche

1. Verfahren zum Erzeugen von wenigstens einem festen Element (22) auf der Grundlage von gesammelten Fettabfällen, **dadurch gekennzeichnet, dass** es darin besteht, in die Fettabfälle Kalk oder Soda im Bereich zwischen 30 bis 50 gr/l einzubringen, ein Abtrennen zuzulassen und dann die Mischung in eine Plattenpresse (18) einzubringen, die eine Vielzahl von Filtern aufweist mit Öffnungen im Bereich von 20 bis 300 µm, um wenigstens ein festes Element (22) mit einem Anteil an festem Material oberhalb von 40 % zu erhalten.

2. Verfahren nach Anspruch 1, **dadurch gekennzeichnet, dass** die Fettabfälle vor dem Einbringen von Kalk oder Soda hydrolisiert werden.

3. Verfahren nach Anspruch 2, **dadurch gekennzeichnet, dass** die Mischung in die Plattenpresse (18) eingebracht wird, bis ein minimaler Druck im Bereich von 12 bar erreicht wird.

4. Verfahren nach einem der vorhergehenden Ansprüche, **dadurch gekennzeichnet, dass** es darin besteht, ein erhaltenes festes Element (22) derart zu trocknen, dass ein Anteil an trockenem Material im Bereich von 80 % erhalten wird.

5. Verfahren nach einem der vorhergehenden Ansprüche, **dadurch gekennzeichnet, dass** vor dem Pressvorgang 4 ml/l an Eisenchlorid oder Aluminiumoxid oder ein Polymer in die Mischung eingebracht wird.

6. Verfahren nach einem der vorhergehenden Ansprüche, **dadurch gekennzeichnet, dass** es darin besteht, die Menge an eingebrachtem Kalk oder Soda einzustellen, bis eine schimmernde Wasserschicht auf der Oberfläche erhalten wird.

7. Verfahren nach einem der vorhergehenden Ansprüche, **dadurch gekennzeichnet, dass** es darin besteht, die gesammelten Fettabfälle zu mischen und ein Abtrennen vor dem Einbringen von Kalk oder Soda zuzulassen.

8. Verfahren zum Erzeugen von kornförmigem Brennstoff, das darin besteht, mit einem Verfahren nach einem der vorhergehenden Ansprüche erhaltene feste Elemente (22) zu zerkleinern und 10 bis 50 Gewichts-% der zerkleinerten Elemente und wenigstens ein holziges Produkt zu mischen.

9. Verfahren zum Erzeugen von kornförmigem Brennstoff nach Anspruch 8, **dadurch gekennzeichnet, dass** es darin besteht, die zerkleinerten Elemente und zerkleinerte Grünabfälle zu mischen.

10. Kornförmiger Brennstoff, der mit dem Verfahren nach Anspruch 8 oder 9 erzeugt worden ist.

11. Verfahren zum Erzeugen von kornförmigem Dünger, das darin besteht, mit einem Verfahren nach einem der Ansprüche 1 bis 7 erhaltene feste Elemente (22) zu zerkleinern und 10 bis 50 Gewichts-% der zerkleinerten Elemente und wenigstens ein holziges Produkt zu mischen.

12. Verfahren zum Erzeugen von kornförmigem Dünger nach Anspruch 11, **dadurch gekennzeichnet, dass** es darin besteht, die zerkleinerten Elemente und zerkleinerte Grünabfälle zu mischen.

13. Kornförmiger Dünger, der durch ein Verfahren nach Anspruch 11 oder 12 erzeugt worden ist.
